# EUROPÄISCHE PATENTSCHRIFT

(11) **EP 0 807 376 B1**
(45) Veröffentlichungstag und Bekanntmachung des Hinweises auf die Patenterteilung: **13.03.2002**
(21) Anmeldenummer: 97107551.0
(22) Anmeldetag: 07.05.1997
(51) Int. Cl.: A01D 75/18, A01B 61/02

(54) **Anfahrschutz für ein an ein Fahrzeug anschliessbares Mähwerk**
Collision-safety for a mower connectable to a vehicle
Protection de collision pour une faucheuse connectable à un véhicule

(30) Priorität: 13.05.1996 US 648237
(43) Veröffentlichungstag der Anmeldung: 19.11.1997
(73) Patentinhaber: DEERE & COMPANY, Moline, Illinois 61265-8098 (US)
(72) Erfinder: Goman, Gerald Eugene, Horicon, Wisconsin 53032 (US); Jerke, Marlyn Lee, Cedar Falls, Iowa 50613 (US)
(74) Vertreter: Magin, Ludwig Bernhard

(56) Entgegenhaltungen:
- EP-A- 0 679 327
- GB-A- 986 363
- US-A- 4 432 192
- US-A- 4 573 306
- US-A- 4 854 112

## Beschreibung

Die Erfindung bezieht sich auf einen Anfahrschutz für ein an ein Fahrzeug über einen Auslegerarm anschließbares Mähwerk, der bei einem frontalen Auftreffen auf ein Hindernis ein Ausweichen des Mähwerks nach rückwärts gestattet und der einen ersten und einen zweiten Teil aufweist.

Herkömmliche Großflächen-Rasenmäher, bei denen die in der Regel an beiden Seiten des Fahrzeuges und vorne vor dem Fahrzeug angeordneten Mähwerke mit mehreren Sichelmessern ausgerüstet sind, können Arbeitsbreiten bis zu fünf Meter erreichen. Dabei kann es leicht vorkommen, dass der Fahrer einmal zu nahe an ein Hindernis heranfährt. Bei dem bekannten Anfahrschutz (US-A-4 854 112), von dem die Erfindung ausgeht, sollen in einem solchen Fall die äußeren Schneideinheiten von dem angefahrenen Hindernis wegschwenken, wonach die weggeschwenkte Schneideinheit und nachdem die Schneideinheit von dem Hindernis frei gekommen ist, durch Anheben wieder in ihre Ausgangsposition gebracht werden soll. Im Einzelnen sind hierzu die äußeren oder seitlichen Mähwerke über einen hochschwenkbaren Auslegerarm und eine hieran schwenkbar angeschlossene Verlängerung mit dem Fahrzeug verbunden, wobei eine Führungsstange im Normalbetrieb ein Ausschwenken der Verlängerung und damit auch des Mähwerks nach hinten verhindern soll. Die Führungsstange besitzt ein federgesperrtes Zwischenstück, das bei einem Anfahren eines Hindernisses und nach Lösen der Federsperre ausziehbar ist. Ein derartiger Anfahrschutz ist ausgesprochen aufwendig und hat den weiteren Nachteil, dass das Mähwerk, nachdem es von dem Hindernis frei ist, nicht automatisch in seine Ausgangsposition zurückkehrt. Um das Mähwerk in seine Ausgangsposition zurückführen zu können, muß die Bedienungsperson den Hubzylinder für das Seitenmähwerk betätigen, wobei auf die räumliche Lage des Zwischenstückes, der Führungsstange und des Mähwerks besonders geachtet werden muss.

Die GB-A-986,363 zeigt ein an eine Drei-Punkt-Aufhängung eines Ackerschleppers angeschlossenes Mähwerk mit einer Überlastsicherung, die bewirkt, dass das Mähwerk bei einem frontalen Auftreffen auf ein Hindernis um eine horizontale Achse auf einem Kreisbogen verschwenkt. Die Überlastsicherung umfasst eine Anordnung mit zwei ineinander eingesteckten Rohren, wobei sich die Rohre bei einer nur geringfügigen Belastung gegen die Wirkung einer Feder gegeneinander verschieben können, wodurch eine umkehrbare geringe Schwenkbewegung des Mähwerks ermöglicht wird. Bei einer stärken Belastung wird die Wirkung der Feder aufgehoben und ein vollständiges Verschwenken des Mähwerks bewirkt, welches zum Fortsetzen des Betriebs ein Eingreifen einer Bedienungsperson erfordert.

Die EP-A1-0 679 327 zeigt ein Mähwerk, welches über eine Anbaueinrichtung an einem Fahrzeug angebracht werden kann und sich während eines Betriebs bezogen auf die Fahrtrichtung des Fahrzeugs nach seitwärts erstreckt. Dem Mähwerk ist es erlaubt, bei einem Auftreffen auf ein Hindernis um ein Gelenk nach rückwärts zu verschwenken, wobei die Anbaueinrichtung einen Kraftspeicher zur Rückführung des Mähwerks in seine Betriebsstellung aufweist.

Die mit der Erfindung zu lösende Aufgabe wird darin gesehen, den bekannten Anfahrschutz einfacher auszubilden und anzuordnen, wobei eine automatische Rückführung in die Ausgangsstellung möglich ist. Hierzu sieht die Erfindung vor, dass das Mähwerk über den ersten und den zweiten Teil an dem Auslegerarm angeschlossen ist, wobei der zweite Teil mit dem Mähwerk und der erste Teil mit dem Auslegerarm verbunden und auf oder in dem ersten Teil gegen Federwirkung verschiebbar ist. Auf diese Weise verschiebt sich bei einem Auftreffen auf ein Hindernis der zweite Teil gegenüber dem ersten Teil, wobei das Mähwerk nach rückwärts geführt wird. Sobald das Mähwerk von dem Hindernis frei ist, springt es infolge der Feder in seine Ausgangsposition zurück. Die Verbindung zwischen Mähwerk und Fahrzeug muss nicht mit einem Gelenk versehen werden. Der Anfahrschutz kann in einfacher Weise in die Verbindung zwischen Auslegerarm und Mähwerk integriert werden, so dass ein zusätzlicher Schwenkanschluss nicht erforderlich ist.

Die nach rückwärts gerichtete Bewegung soll, um weitere Beschädigungen zu verhindern, gezielt erfolgen, weshalb ein weiterer erfindungsgemäßer Vorschlag vorsieht, dass der erste Teil eine lineare Achse aufweist, die mit Bezug auf die Fahrzeuglängsachse winklig angeordnet ist und sich nach rückwärts und nach innen erstreckt. Bei einem Auftreffen auf ein Hindernis verschiebt sich damit das Mähwerk nach rückwärts und nach innen auf das Fahrzeug zu, d. h. die Breite über alles wird verringert, was bei Tordurchfahrten von besonderer Bedeutung sein kann, wenn die Außenkante einen Torpfosten touchiert.

Der Anfahrschutz kann zusätzlich noch derart ausgebildet werden, dass der erste Teil eine lineare Längsachse aufweist, um die der zweite Teil drehbar ist. Damit kann das Mähwerk bei einem Auftreffen auf Bodenunebenheiten noch um den ersten Teil schwenken bzw. kippen. Teile des Anfahrschutzes dienen damit noch als Kippachse. Die Teile dienen dadurch unterschiedlichen Zwecken.

Der erste und der zweite Teil können beispielsweise als aufeinander verstellbare Schienen ausgebildet sein. Bevorzugt wird jedoch nach der Erfindung, dass der erste und der zweite Teil als Rohre ausgebildet sind. Diese lassen sich bei guter Führung leicht verschieben und gegeneinander verdrehen. Im Inneren bieten sie Platz für die Aufnahme der Feder. Zweckmäßig ist der erste Teil in den zweiten Teil einsteckbar, wobei der zweite Teil auf dem ersten Teil begrenzt verschiebbar sein kann aber nicht muß und einen einstellbaren Schiebeweg haben kann. Über den Schiebeweg lässt sich in einfacher Weise die nach rückwärts gerichtete Ausweichbewegung bestimmen. Für die Begrenzung der Schiebebewegung bieten sich viele Teile an, wie Anschlag des äußeren Rohres an den Auslegerarm oder Anschlag des äußeren Rohres an das Stimende des inneren Rohres. Wenn der Schiebeweg einstellbar ist, bietet es sich auch an, dass der Weg der Feder einstellbar ist. Auf diese Weise lässt sich somit die Federkraft einstellen, gegebenenfalls in Abhängigkeit vom Schiebeweg.

Eine weitere Schwenkachse, beispielsweise eine quer zur Fahrtrichtung verlaufende, lässt sich dann erreichen, wenn der zweite Teil mit dem Mähwerk schwenkbar verbunden ist. Auf diese Weise wäre das Mähwerk an den Auslegerarm um eine in Fahrtrichtung oder etwa in Fahrtrichtung und um eine quer zur Fahrtrichtung verlaufende Achse verschwenkbar. Das Mähwerk könnte sich allen Bodenunebenheiten anpassen.

Eine Ausweichbewegung entgegen Federwirkung und eine Rückstellbewegung unter Federwirkung lässt sich femer dadurch erreichen, dass die Feder einenends gegen einen Anschlag im ersten Rohr und anderenends gegen einen mit dem zweiten Rohr verstellbaren Anschlag anliegt. Bei einem Verstellen des zweiten Rohres wird dabei die Feder gespannt oder entspannt, je nachdem in welcher Richtung die Verschiebung erfolgt. Der feststehende Anschlag im ersten Rohr kann dabei ein das erste Rohr verschließender Deckel sein, so dass auch keine Fremdkörper in das Rohr eindringen können. Was den verstellbaren Anschlag anbelangt, so kann in dem zweiten Rohr ein mit diesem in dem ersten Rohr verstellbares drittes Rohr vorgesehen sein, das endseitig den verstellbaren Anschlag aufweist, wobei die Feder auf einer in den verstellbaren Anschlag einschraubbaren Gewindestange vorgesehen ist, die mit dem zweiten Rohr verschiebbar ist und die Rückstellbewegung des zweiten Rohres durch Anlage an das erste Rohr begrenzt. Durch Verstellen der Gewindestange lässt sich damit in einfacher Weise die Federspannung verändern, aber auch der Verschiebeweg. Die Anlage der Gewindestange an den ersten Teil kann wiederum in einfachster Weise dadurch erfolgen, dass der Kopf der Gewindestange von außen gegen den Deckel des ersten Rohres in der Normalstellung anliegt. Man erkennt wiederum, dass viele Teile Doppelfunktionen wahrnehmen.

In der Zeichnung ist ein nachfolgend näher erläutertes Ausführungsbeispiel der Erfindung dargesteilt. Es zeigt:
- Fig. 1: einen Großflächenrasenmäher in der Draufsicht und
- Fig. 2: einen Anfahrschutz für ein Seitenmähwerk im Schnitt.

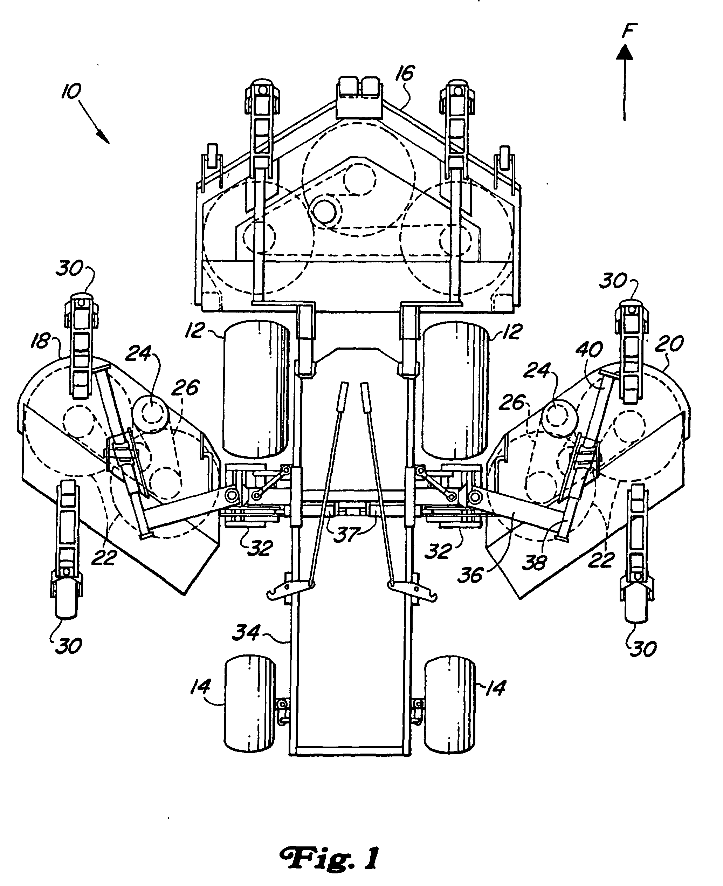

In Fig. 1 der Zeichnung ist ein Großflächensichelmäher in Form eines selbstfahrenden Fahrzeugs 10 dargestellt, das sich auf antreibbaren Vorderrädern 12 und lenkbaren Hinterrädern 14 abstützt. Derartige Fahrzeuge haben eine gedrungene Bauweise, und die lenkbaren rückwärtigen Räder 14 tragen dazu bei, dass der Wenderadius sehr klein ist. Der Großflächen-Sichelmäher ist mit drei Schneideinheiten ausgerüstet, und zwar mit einer vorderen Schneideinheit 16 und mit zwei seitlich angeordneten Schneideinheiten 18 und 20, so dass eine relativ große Arbeitsbreite erzielt wird. Nachfolgend wird die Schneideinheit 20 an der rechten Fahrzeugseite im einzelnen beschrieben mit dem Verstehen, dass die Schneideinheit 18 an der linken Fahrzeugseite mehr oder weniger identisch ist. Die beiden seitlichen Schneideinheiten 18 und 20 sind nahe der Achse der Vorderräder 12 angeordnet, so dass bei Kurvenfahrten wenig oder kein ungeschnittenes Gras stehenbleibt. Die in den Schneideinheiten umlaufenden Mähmesser 22 werden über Hydraulikmotore 24 und je einen Antriebsriemen 26 angetrieben, der um den Mähmessern zugeordnete Riemenscheiben 28 geführt ist. Die einzelnen Schneideinheiten stützen sich über Pendelräder 30 auf dem Boden ab und können dadurch Bodenunebenheiten leicht folgen.

Die seitlichen Schneideinheiten 18 und 20 können aus der in Fig. 1 erkennbaren Arbeitsstellung in eine Transportstellung geklappt werden. Hierzu ist eine Aushebevorrichtung 32 vorgesehen, die die Schneideinheiten mit dem Fahrzeugrahmen 34 verbindet und zu der jeweils ein schwenkbar gelagerter Schiebearm 36 gehört, der sich von jeder Fahrzeugseite aus seitlich nach außen erstreckt. Die Höhenverstellung der seitlichen Schneideinheiten erfolgt über hydraulische Zylinder 37. Während eines normalen Arbeitseinsatzes können die beiden Schiebearme 36 sowohl um in Fahrtrichung verlaufende als auch um quer zur Fahrtrichtung verlaufende Schwenkachsen bei einem Auftreffen der Schneideinheiten auf Bodenunebenheiten nach oben und nach unten ausweichen. Einzelheiten dieser Aushebevorrichtung sind in unserer europäischen Patentanmeldung mit dem gleichen Anmeldetag, die die Priorität aus der Patentanmeldung mit dem Aktenzeichen 645 367 in den Vereinigten Staaten von Amerika vom 13. Mai 1996 in Anspruch nimmt, beschrieben, weshalb auf diese Anmeldung ausdrücklich verwiesen wird.

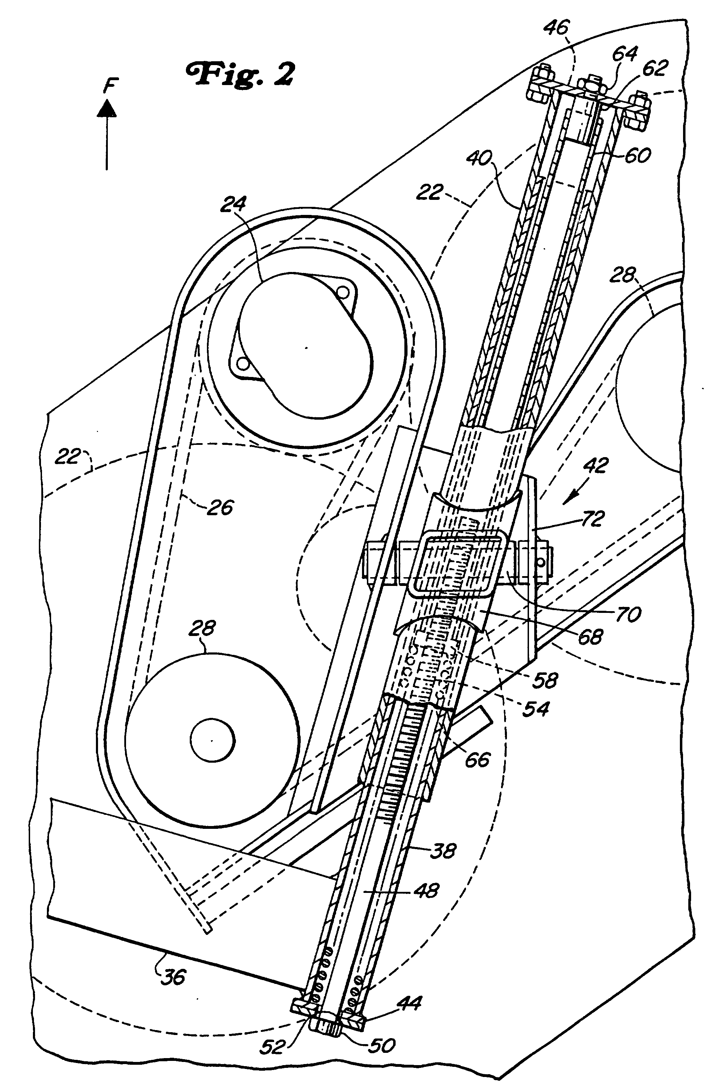

Die seitlichen Schneideinheiten 18 und 20 sind außerdem noch mit einem Aufprallschutz oder Anfahrschutz versehen. Hierzu gehört zunächst ein mit dem außenliegenden Ende der Schiebearme 36 fest verbundener erster Teil 38 in Form eines Rohres. Das erste Rohr 38 ist, wie aus Fig. 2 erkennbar ist, in einen zweiten Teil 40 ebenfalls in Form eines Rohres einsteckbar. An das zweite Rohr 40 ist die jeweilige Schneideinheit über eine Anschlussvorrichtung 42 angeschlossen, und das zweite Rohr kann sich auf dem ersten Rohr 38 in Richtung dessen Längsachse verstellen, wenn die betreffende Schneideinheit auf ein Hindemis frontal aufprallt. Die dann auftretenden Kräfte werden zumindest teilweise absorbiert. Wie aus Fig. 2 femer zu ersehen ist, sind die äußeren Enden der beiden Rohre 38 und 40 über je eine Endkappe 44 und 46 dauerhaft verschlossen. Die erste Endkappe 44 ist mit einer Öffnung 52 versehen, durch die eine Gewindestange 48 mit einem Sechskantkopf 50 geführt ist. Das vordere Gewindeende 54 der Gewindestange 48 ist in einer Öffnung in einer in den Ansprüchen auch als Anschlag bezeichneten Stirnwand 58 aufgenommen, die ihrerseits mit einem dritten Teil 60 in Form eines Rohres fest verbunden ist. Das der Stimwand 58 abgelegene vordere Ende des dritten Rohres 60 ist über einen Schraubenteil 62 und eine Mutter 64 mit der zweiten Endkappe 46 verbunden, die das vordere Ende des zweiten Rohres 40 verschließt. Zwischen der Stimwand 58 und der ersten Endkappe 44 ist noch in dem ersten Rohr 38 eine Druckfeder 66 vorgesehen.

Der Fig. 2 ist damit zu entnehmen, dass das erste Rohr 38 in dem zweiten Rohr 40 verschiebbar aufgenommen ist. Das dritte Rohr 60 befindet sich in dem ersten und dem zweiten Rohr 38 und 40 und hat eine geringere Länge als das zweite Rohr. Die Gewindestange erstreckt sich durch das erste Rohr 38 bis in das dritte Rohr 60 und nimmt die Druckfeder 66 auf, die sich nur in dem ersten Rohr befindet.

Zu der Anschlussvorrichtung 42 gehört eine Hülse 68, die mit der Außenfläche des zweiten Rohres 40 fest verbunden ist. Durch die Hülse 68 erstreckt sich ein Schwenkzapfen 70, der seinerseits in mit der Schneideinheit fest verbundenen Stehlagern 72 angeordnet ist. Aus Fig. 2 ist außerdem noch zu entnehmen, dass sich der Schwenkzapfen quer zur Fahrtrichtung erstreckt, so dass die Schneideinheit um diese Achse Nickbewegungen ausführen kann, sobald die Schneideinheit auf unebenem Boden läuft.

Während des Arbeitseinsatzes schiebt der Schiebearm 36 bei Vorwärtsfahrt des Fahrzeuges 10 die Schneideinheit, so dass neben dem Fahrzeug der Rasen gemäht wird. Dabei kann es vorkommen, dass die seitliche Schneideinheit frontal gegen Bordsteine, Einfassungen, Gartenzaunpfähle, Baumstämme usw. stoßen kann. Sollte dies passieren, dann kann die auffahrende Schneideinheit nach rückwärts ausweichen. Während eines Aufpralls verschiebt sich die entsprechende Schneideinheit 20 nach rückwärts, weil sich das zweite Rohr 40 auf dem ersten Rohr 38 nach rückwärts verstellt. Bei einer solchen Verstellung wird die Endkappe 46 des zweiten Rohres und das damit verbundene dritte Rohr 60 mitverstellt. Entsprechendes gilt auch für die Gewindestange 48, die sich dann durch die Öffnung 52 nach rückwärts verstellt, wobei die Druckfeder 66 zusammengedrückt wird. Alle Schiebebewegungen erfolgen in Richtung der Längsachse des ersten Rohres 38. Aus Fig. 1 ist zu erkennen, dass die Längsachse des ersten Rohres 38 in einem Winkel zu der Längsachse des Fahrzeuges verläuft, so dass sich die Schneideinheit bei einem Auftreffen auf ein Hindernis nach rückwärts und auf das Fahrzeug zu verstellt. Die Schneideinheit verstellt sich damit nicht nach außen, wo sie gegen weitere Hindernisse stoßen könnte.

Sobald die Schneideinheit nicht mehr gegen das Hindernis stößt, führt die Druckfeder die Schneideinheit wieder in ihre alte Lage zurück. Dies erfolgt dadurch, dass die Druckfeder auf die Stimwand 58 wirkt, wodurch die Stirnwand, die Gewindestange 48, das dritte Rohr 60, die zweite Endkappe 46, das zweite Rohr 40 und die Schneideinheit 20 mit Bezug auf das erste Rohr 38 nach vorne geschoben werden. Diese nach vorne gerichtete Bewegung ist beendet, sobald der Kopf 50 der Gewindestange 48 gegen die Außenseite der ersten Endkappe 44 zur Anlage kommt. Infolge der Druckfeder springt aber die Schneideinheit in jedem Fall in ihre Ausgangslage zurück, sobald die Schneideinheit frei von dem Hindernis ist. Die Bedienungsperson braucht in keinem Fall die Schneideinheit zurück zu setzen.

Der Anfahrschutz ist darüberhinaus derart ausgelegt, dass die Schneideinheit noch um die Längsachse des ersten Rohres kippen kann. Diese Bewegungen treten auf, wenn die Schneideinheit über Bodenunebenheiten läuft. Das zweite Rohr 40 dreht dann auf dem ersten Rohr 38 und der Anfahrschutz wirkt als Kippachse. Verschiedene Teile haben eine Doppelfunktion, wodurch die Teileanzahl, die Herstellungskosten und die Zusammenbaukosten gesenkt werden.

Die Vorspannung der Druckfeder 66 des Anfahrschutzes ist einstellbar. Dies wird in einfacher Weise durch Drehen des Sechskantkopfes 50 der Gewindestange 48 erreicht, die sich dabei in die Stimwand 58 hinein- oder aus der Stimwand herausdreht. Der Abstand zwischen der ersten Endkappe 44 und der Stimwand wird dabei verändert und die Druckfeder 66 gespannt oder entspannt. Wird der Abstand verkleinert, dann wird die Vorspannung vergrößert. Wird der Abstand vergrößert, dann wird die Vorspannung verkleinert. Die Vorspannung sollte jedoch nicht so groß sein, dass sich das zweite Rohr 40 auf dem ersten Rohr 38 nicht mehr verschieben lässt. Allerdings sollte die Vorspannung auch nicht so klein sein, dass das zweite Rohr 40 nicht mehr fest auf dem ersten Rohr gehalten wird. Eine Rückstellkraft von 50 kp hat sich als zweckmäßig erwiesen.

Da die Druckfeder sich außerdem vollständig innerhalb des ersten Rohres 38 befindet, ist sie schädlichen Umwelteinflüssen nicht ausgesetzt. Fremdteile können sich in der Feder nicht festsetzen. Ihre Lebensdauer wird verlängert.

## Patentansprüche

1. Anfahrschutz für ein an ein Fahrzeug (10) über einen Auslegerarm (36) anschließbares Mähwerk (18, 20), der bei einem frontalen Auftreffen auf ein Hindernis ein Ausweichen des Mähwerks nach rückwärts gestattet und der einen ersten und einen zweiten Teil (38, 40) aufweist, **dadurch gekennzeichnet, dass** das Mähwerk (18, 20) über den ersten und den zweiten Teil (38, 40) an dem Auslegerarm (36) angeschlossen ist, wobei der zweite Teil (40) mit dem Mähwerk (18, 20) und der erste Teil (38) mit dem Auslegerarm (36) verbunden und der zweite Teil (40) auf oder in dem ersten Teil (38) gegen Federwirkung verschiebbar ist.

2. Anfahrschutz nach Anspruch 1, **dadurch gekennzeichnet, dass** der erste Teil (38) eine lineare Achse aufweist, die mit Bezug auf die Fahrzeuglängsachse winklig angeordnet und sich nach rückwärts und nach innen erstreckt.

3. Anfahrschutz nach Anspruch 1, **dadurch gekennzeichnet, dass** der erste Teil (38) eine lineare Längsachse aufweist, um die der zweite Teil (40) drehbar ist.

4. Anfahrschutz nach Anspruch 1, **dadurch gekennzeichnet, dass** der erste und der zweite Teil (38, 40) als Rohre ausgebildet sind, wobei der erste Teil (38) in den zweiten Teil (40) einsteckbar ist.

5. Anfahrschutz nach Anspruch 4, **dadurch gekennzeichnet, dass** der zweite Teil (40) auf dem ersten Teil (38) begrenzt verschiebbar ist, wobei der Schiebeweg einstellbar ist.

6. Anfahrschutz nach Anspruch 1, **dadurch gekennzeichnet, dass** der Weg der Feder (66) einstellbar ist.

7. Anfahrschutz nach einem oder mehreren der vorherigen Ansprüche, **dadurch gekennzeichnet, dass** der zweite Teil (40) mit dem Mähwerk (18, 20) schwenkbar verbunden ist.

8. Anfahrschutz nach einem oder mehreren der vorherigen Ansprüche, **dadurch gekennzeichnet, dass** die Feder (66) einenends gegen einen Anschlag im ersten Rohr (38) und anderenends gegen einen mit dem zweiten Rohr (40) verstellbaren Anschlag anliegt.

9. Anfahrschutz nach einem oder mehreren der vorherigen Ansprüche, **dadurch gekennzeichnet, dass** in dem zweiten Rohr (40) ein mit diesem in dem ersten Rohr (38) verstellbares drittes Rohr (60) vorgesehen ist, das endseitig den verstellbaren Anschlag (58) aufweist.

10. Anfahrschutz nach Anspruch 9, **dadurch gekennzeichnet, dass** die Feder (66) auf einer in den verstellbaren Anschlag (58) einschraubbaren Gewindestange (48) vorgesehen ist, die mit dem zweiten Rohr verschiebbar ist und die Rückstellbewegung des zweiten Rohres (40) durch Anlage an das erste Rohr (38) begrenzt.

## Claims

1. Impact protection for a mower mechanism (18, 20) which can be connected to a vehicle (10) by an outrigger arm (36), which allows deflection to the rear on frontal impact against an obstruction and which comprises first and second parts (38, 40), **characterized in that** the mower mechanism (18, 20) is attached to the outrigger arm (36) through the first and second parts (38, 40), wherein the second part (40) is connected to the mower mechanism (18, 20) and the first part (38) is connected to the outrigger arm (36) and the second part (40) can shift on or in the first part (38) against spring action.

2. Impact protection according to claim 1, **characterized in that** the first part (38) has a linear axis which is arranged at an angle relative to the longitudinal axis of the vehicle and extends rearwards and inwardly.

3. Impact protection according to claim 1, **characterized in that** the first part (38) has a linear longitudinal axis, about which the second part (40) can rotate.

4. Impact protection according to claim 1, **characterized in that** the first and second parts (38, 40) are formed as tubes and the first part (38) can be inserted in the second part (40).

5. Impact protection according to claim 4, **characterized in that** the second part (40) can shift on the first part (38) within limits, while the stroke of movement is adjustable.

6. Impact protection according to claim 1, **characterized in that** the stroke of the spring (66) is adjustable.

7. Impact protection according to one or more of the preceding claims, **characterized in that** the second part (40) is pivotally attached to the mower mechanism (18, 20).

8. Impact protection according to one or more of the preceding claims, **characterized in that** the spring (66) bears at one against a stop in the first tube (38) and at the other end against a stop which is movable with the second tube (40).

9. Impact protection according to one or more of the preceding claims, **characterized in that** a third tube (60) is provided in the second tube (40) and is movable therewith in the first tube (38) and has the movable stop (58) on its end.

10. Impact protection according to claim 9, **characterized in that** the spring (66) is provided on a threaded rod (48) which can be screwed into the movable stop (58) and is movable with the second tube and limits the return movement of the second tube (40) by abutment with the first tube (38).

## Revendications

1. Dispositif de protection en cas de collision pour une faucheuse (18, 20) qui peut être raccordée à un véhicule (10) par l'intermédiaire d'un bras en console (36), et dans le cas d'un choc frontal contre un obstacle, permet un évitement de la faucheuse vers l'arrière et comporte des première et seconde parties (38, 40), **caractérisé en ce que** la faucheuse (18, 20) est raccordée par l'intermédiaire des première et seconde parties (38, 40) au bras en console (36), la seconde partie (40) étant reliée à la faucheuse (18, 20) et la première partie (38) étant reliée au bras en console (36) et la seconde partie (40) étant déplaçable sur ou dans la première partie (38) à l'encontre de l'action d'un ressort.

2. Dispositif de protection en cas de collision selon la revendication 1, **caractérisé en ce que** la première partie (38) possède un axe linéaire, qui est disposé obliquement par rapport à l'axe longitudinal du véhicule et s'étend vers l'arrière et vers l'intérieur.

3. Dispositif de protection en cas de collision selon la revendication 1, **caractérisé en ce que** la première partie (38) possède un axe longitudinal linéaire, autour duquel la seconde partie (40) peut tourner.

4. Dispositif de protection en cas de collision selon la revendication 1, **caractérisé en ce que** la première partie et la seconde partie (38, 40) sont agencées sous la forme de tubes, la première partie (38) pouvant être enfichée dans la seconde partie (40).

5. Dispositif de protection en cas de collision selon la revendication 4, **caractérisé en ce que** la seconde partie (40) est déplaçable d'une manière limitée sur la première partie (38), la course de déplacement étant réglable.

6. Dispositif de protection en cas de collision selon la revendication 1, **caractérisé en ce que** la course de débattement du ressort (66) est réglable.

7. Dispositif de protection en cas de collision selon une ou plusieurs des revendications précédentes, **caractérisé en ce que** la seconde partie (40) est reliée de manière à pouvoir pivoter à la faucheuse (18, 20).

8. Dispositif de protection en cas de collision selon une ou plusieurs des revendications précédentes, **caractérisé en ce que** le ressort (66) s'applique par une extrémité contre une butée dans le premier tube (68) et par son autre extrémité contre une butée réglable avec le second tube (40).

9. Dispositif de protection en cas de collision selon une ou plusieurs des revendications précédentes, **caractérisé en ce que** dans le second tube (40) est prévu un troisième tube (60), qui est réglable avec ce tube dans le premier tube (68) et qui comporte à son extrémité une butée réglable (58).

10. Dispositif de protection en cas de collision selon la revendication 9, **caractérisé en ce que** le ressort (66) est prévu sur une tige filetée (48), qui est vissable dans la butée réglable (58) et qui est déplaçable avec le second tube et limite le déplacement de rappel du second tube (40) par application contre le premier tube (38).
